(19) Europäisches Patentamt / European Patent Office / Office européen des brevets

(11) **EP 4 632 548 A1**

(12) **EUROPEAN PATENT APPLICATION**
published in accordance with Art. 153(4) EPC

(43) Date of publication:
**15.10.2025 Bulletin 2025/42**

(51) International Patent Classification (IPC):
**G06F 3/0488** (2022.01)

(21) Application number: **24837282.3**

(22) Date of filing: **29.02.2024**

(86) International application number:
**PCT/CN2024/079452**

(87) International publication number:
**WO 2025/179562 (04.09.2025 Gazette 2025/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• Guangzhou Shiyuan Electronics Co., Ltd.
Guangzhou, Guangdong 510530 (CN)
• Guangzhou Shiyuan Artificial Intelligence Research
Institute Limited Company
Guangzhou, Guangdong 510530 (CN)

(72) Inventors:
• **LIU, Zhanming**
**Guangzhou, Guangdong 510530 (CN)**
• **YAO, Jincheng**
**Guangzhou, Guangdong 510530 (CN)**

(74) Representative: **Grünecker Patent- und Rechtsanwälte**
**PartG mbB**
**Leopoldstraße 4**
**80802 München (DE)**

(54) **TOUCH AREA DETERMINATION METHOD AND APPARATUS, TOUCH METHOD AND APPARATUS, DISPLAY DEVICE, AND MEDIUM**

(57) Embodiments of the present disclosure disclose a method for determining touch region, a touch method, an apparatus, a display device, and a medium. The display device is provided with a laser radar for touch detection, the scanning area of the laser radar is larger than the display surface of the display device, which may scan regions outside the display surface. Based on a detection range of the laser radar that is not constrained by the display surface, when the function of extending the touch region is enabled, the second touch region is additionally determined in the region outside the display surface. Through the first touch region and the second touch region, the touch operation detected in the corresponding region on the display surface and the touch operation detected outside the display surface are processed separately, thereby breaking through the limitations of contents displayed on the screen and achieving interactive operations in non-screen display regions. These interactive operations can meet the diverse control requirements in multi-person communication scenarios.

acquiring position information with respect to a positioning reference point in the display surface; wherein the blocking position information is collected by the laser radar scanning on the display surface of the display device, and the positioning reference point is a point in the display surface for determining the specific position information of the display surface in a scanning surface of the laser radar — S110

determining a first touch region, corresponding to the display surface, in the scanning surface of the laser radar based on the blocking position information with respect to the positioning reference point — S120

acquiring target position information when a function for extending the touch region in the display device is enabled; wherein the target position information is used for extending region of the display surface — S130

determining a second touch region within the peripheral region of the display device based on the first touch region and the target position information, wherein the second touch region is a region used for extending touch in the scanning surface of the laser radar; both the first touch region and the second touch region are used for touch interaction — S140

in an interactive state, when receiving blocking position information corresponding to the first touch region, generating touch position information point to point based on the blocking position information — S150

in the interactive state, when receiving the blocking position information corresponding to the second touch region, generating a touch system event based on the blocking position information — S160

Fig. 1

## Description

### FIELD

The present disclosure relates to the field of interactive technology, and in particular, to a method for determining touch region, a touch method, an apparatus, a display device, and a medium.

### BACKGROUND

With the continuous development and popularization of information technology, various types of terminal devices continue to emerge, and the communication manners between terminal devices are becoming increasingly diverse. The rich and diverse communication manners and terminal devices provide powerful technical support for various forms of communication between people. For example, in an electronic conference room built based on information technology, various peripheral devices such as microphones, speakers, and screen transmitters are arranged around the display devices. In multi-person communication activities conducted in an electronic conference room, the peripheral devices are connected to the display devices and cooperate with the display devices to achieve information collection, transmission, and presentation during the multi-person communication process. In multi-person communication scenario where the display devices serve as hardware center for displaying, human-machine interaction on display devices is usually achieved through touch operations.

The inventor found that when using existing display devices for human-machine interaction in multi-person communication, the interface of touch operation usually overlaps with the interface displayed on the screen, and the specific interaction object is usually display contents of a screen. The basis of this interaction design makes the interaction operation strictly limited by the contents displayed on the screen, and the control of the display device cannot meet the rich and diverse control requirements in multi-person communication scenarios.

### SUMMARY

The present disclosure provides a method for determining touch region, a touch method, an apparatus, a display device, and a medium to solve a technical problem that existing interactive operations are strictly limited by display contents of a screen, and the control of the display device cannot meet diverse control requirements in multi-person communication scenarios.

According to a first aspect of the present disclosure, a method for determining touch region is provided, being applied to a display device, where the display device is provided with at least one laser radar, the laser radar is configured to scan a display surface of the display device and a peripheral region of the display device, the method for determining touch region includes:

acquiring blocking position information with respect to a positioning reference point in the display surface; where the blocking position information is collected by the laser radar scanning on the display surface of the display device, and the positioning reference point is a point in the display surface for determining the specific position information of the display surface in a scanning surface of the laser radar;

determining a first touch region, corresponding to the display surface, in the scanning surface of the laser radar based on the blocking position information with respect to the positioning reference point;

acquiring target position information when a function for extending the touch region in the display device is enabled; where the target position information is used for extending region of the display surface; and

determining a second touch region within the peripheral region of the display device based on the first touch region and the target position information, where the second touch region is a region used for extending touch in the scanning surface of the laser radar; both the first touch region and the second touch region are used for touch interaction.

As mentioned above, the display device is provided with a laser radar for touch detection, the scanning area of the laser radar is larger than the display surface of the display device, which may scan regions outside the display surface. Based on a detection range of the laser radar that is not constrained by the display surface, when the function of extending the touch region is enabled, the second touch region is additionally determined in the region outside the display surface. Through the first touch region and the second touch region, the touch operation detected in the corresponding region on the display surface and the touch operation detected outside the display surface are processed separately, thereby breaking through the limitations of contents displayed on the screen and achieving interactive operations in non-screen display regions. These interactive operations can meet the diverse control requirements in multi-person communication scenarios.

The acquiring position information with respect to a positioning reference point in the display surface includes:

displaying reference-point touch guidance for guiding to touch the positioning reference point in the display surface, where the reference-point touch guidance includes an order of touching the positioning reference points; and

in a state of displaying the reference-point touch guidance, associating the blocking position information acquired from the laser radar with the positioning reference point in the touch order to acquire the blocking position information with respect to the positioning reference point.

As mentioned above, when the function of extending the touch region is enabled, the user operates on the display surface through the reference-point touch guidance. Based on the blocking position information acquired during the guidance process, the blocking position information with respect to the positioning reference point is determined for determining the first touch region and the second touch region. The display device and laser radar can be flexibly installed based on the present disclosure scenario of the display device, and the position of the display surface and the position used for extending touch can be quickly determined after installation.

The determining a first touch region, corresponding to the display surface, in the scanning surface of the laser radar based on the blocking position information with respect to the positioning reference point includes:

determining a conversion relationship between a coordinate system of the laser radar and a coordinate system of the display surface based on the blocking position information with respect to the positioning reference point;
determining the target position of respective vertexes of the display surface in the coordinate system of the laser radar based on the conversion relationship; and
determining the first touch region, corresponding to the display surface, in the scanning surface of the laser radar based on the target position of the respective vertexes.
As mentioned above, while determining the first touch region based on the blocking position information of the reference point, the conversion relationship between the coordinate system of the laser radar and the coordinate system of the display surface is also determined. In the subsequent interaction state, the conversion relationship may be directly processed to improve interaction efficiency and accuracy.

The acquiring target position information includes:

acquiring a preset position parameter for extending region of the display surface as the target position information;
or,
collecting spatial position information of the display device in an actual usage scenario; and
generating the target position information based on the spatial position information.

As mentioned above, the target position information may be acquired through various manners, thereby adapting to user interaction needs or usage scenarios and acquiring appropriate target position information.

The acquiring a preset position parameter for extending region of the display surface as the target position information includes:

reading the position parameter for extending region of the display surface from a preset parameter configuration file as the target position information;
or,
displaying an adjustment interface for configuring a parameter of extending the touch region; and
in response to a target parameter value of the parameter received in the adjustment interface, acquiring the position parameter for extending region of the display surface as the target position information.

As mentioned above, touch extending requirements of the user can be met in various manners through preset suitable position parameters or position parameters input by the user.

The generating the target position information based on the spatial position information includes:

determining spatial distance information of the display device from blocking objects on the upper, lower, left, and right sides in the actual usage scenario based on the spatial position information; and
generating the target position information by combining the size of the display surface of the display device with the spatial distance information.

As mentioned above, by determining the target position information through the installation state of the display device in the actual scenario, it is possible to ensure that the generated second touch region can be realized in the actual scenario, and ensure the normal completion of touch extending.

The determining a second touch region within the peripheral region of the display device based on the first touch region and the target position information includes:

determining an extending direction and an extending distance for extending region of the display surface based on the target position information; and
translating the first touch region along the extending direction for the extending distance from a side of the first touch region corresponding to the extending direction, to obtain the extending touch region covered by the translation as the second touch region.

As mentioned above, by translating the side of the first touch region outward by a certain distance to achieve extending, the second touch region can be quickly determined.

The determining a second touch region within the peripheral region of the display device based on the first touch region and the target position information includes:

determining an extending direction and an extending area for extending region of the display surface based on the target position information; and
extending the first touch region along the extending direction according to the extending area to obtain the extending touch region within the peripheral region of the display device in the scanning surface of the laser radar as the second touch region.

As mentioned above, by extending a designated area on one side of the first touch region to achieve extending, it is possible to acquire a second touch region with a shape that adapts to various scenario states.

According to a second aspect of the present disclosure, a touch method is further provided, being applied to a display device, where an interactive region of the display device includes a first touch region and a second touch region determined by any one of the method for determining touch regions in the first aspect; the touch method includes:

in an interactive state, when receiving blocking position information corresponding to the first touch region, generating touch position information point to point based on the blocking position information; and
in the interactive state, when receiving the blocking position information corresponding to the second touch region, generating a touch system event based on the blocking position information.

As mentioned above, on the basis of the detection range of the laser radar that is not constrained by the display surface, touch operations detected in the corresponding region of the display surface and touch operations detected in regions outside the display surface are processed separately, thereby achieving interactive operations that break the limitations of contents displayed on the screen in non-screen display regions. These interactive operations can meet the diverse control requirements in multi-person communication scenarios.

In the interactive state, when receiving the blocking position information corresponding to the second touch region, generating a touch system event based on the blocking position information includes:
in the interactive state, when receiving the blocking position information corresponding to the second touch region, determining multiple blocking position information having same change trend of the same coordinate component and change amount within a preset range as a touch system event, and determining a type of the touch system event based on the change trend.

As mentioned above, based on the constraints on the changing patterns during the movement process, it is possible to effectively recognize mis-operations and improve the response accuracy of interactive operations in the extending touch region.

According to a third aspect of the present disclosure, an apparatus for determining touch region is further provided, being applied to a display device, where the display device is provided with at least one laser radar, the laser radar is configured to scan a display surface of the display device and a peripheral region of the display device, the apparatus for determining touch region includes:

a blocking-position-information acquiring module, configured to acquire position information with respect to a positioning reference point in the display surface; where the blocking position information is collected by the laser radar scanning on the display surface of the display device, and the positioning reference point is a point in the display surface for determining the specific position information of the display surface in a scanning surface of the laser radar;
a first region determining module, configured to determine a first touch region, corresponding to the display surface, in the scanning surface of the laser radar based on the blocking position information with respect to the positioning reference point;
a target-position-information acquiring module, configured to acquire target position information when a function for extending the touch region in the display device is enabled; where the target position information is used for extending region of the display surface; and
a second region determining module, configured to determine a second touch region within the peripheral region of the display device based on the first touch region and the target position information, where the second touch region is a region used for extending touch in the scanning surface of the laser radar; both the first touch region and the second touch region are used for touch interaction.

According to a fourth aspect of the present disclosure, a touch apparatus is further provided, being applied to a display device, where an interactive region of the display device includes a first touch region and a second touch region determined by any one of the method for determining touch regions in the first aspect; the touch apparatus includes:

a first touch-region interaction processing module, configured to, in an interactive state, when receiving blocking position information corresponding to the first touch region, generate touch position information point to point based on the blocking position information; and
a second touch-region interaction processing module, configured to, in the interactive state, when receiving the blocking position information corresponding to the second touch region, generate a touch system event based on the blocking position information.

**In** the interactive state, when receiving the blocking position information corresponding to the second touch region, generating a touch system event based on the blocking position information includes:

in the interactive state, when receiving the blocking position information corresponding to the second touch region, determining multiple blocking position information having same change trend of the same coordinate component and change amount within a preset range as a touch system event, and determining a type of the touch system event based on the change trend.

According to a fifth aspect of the present disclosure, a display device is further provided, including:

a laser radar;
one or more processors;
a memory, configured to store one or more computer programs;
when one or more computer programs are executed by one or more processors, causing the display device to implement any one of the methods as described in the first aspect.

According to a sixth aspect of the present disclosure, a computer-readable storage medium is further provided, on which a computer program is stored, when the computer program is executed by a processor, any one of the methods as described in the first aspect is implemented.

**BRIEF DESCRIPTION OF THE DRAWINGS**

Fig. 1 is a flowchart of a touch extending interactive method according to an embodiment of the present disclosure.
Fig. 2 is a front schematic diagram of a display device in related technology.
Fig. 3 is a diagram of a relationship between touch and display of a display device in related technologies.
Fig. 4 is a diagram of a principle of detecting blocking position information with a laser radar according to an embodiment of the present disclosure.
Fig. 5 is an exemplary diagram of a state of a touch positioning reference point according to an embodiment of the present disclosure.
Fig. 6 is an exemplary diagram of distribution of a first touch region and a second touch region according to an embodiment of the present disclosure.
Fig. 7 is a diagram of a structure of an apparatus for determining touch region according to an embodiment of the present disclosure.
Fig. 8 is a diagram of a structure of a touch apparatus according to an embodiment of the present disclosure.
Fig. 9 is a diagram of a structure of a display device according to an embodiment of the present disclosure.

**DESCRIPTION OF THE PREFERRED EMBODIMENTS**

The present disclosure will be further described in detail with reference to the accompanying drawings and embodiments. It may be understood that the specific embodiments described here are used to explain the present disclosure, rather than to limit the present disclosure. Additionally, it should be noted that for ease of description, only a portion related to the present disclosure is shown in the accompanying drawings, rather than the entire structure.

It should be noted that due to space limitations, the present disclosure does not exhaustively list all optional embodiments. After reading the present disclosure, those skilled in the art should be able to imagine that as long as the technical features do not contradict each other, any combination of technical features may constitute optional embodiments.

The following provides a detailed description of each embodiment of the present disclosure.

An existing display device 10 is an integrated device that controls contents displayed on a screen and realizes human-computer interaction operation, which integrates one or more functions such as projector, electronic whiteboard, screen, sound system, television, and video conference terminal.

Typically, display devices are installed with at least one operating system, the operating system includes but not limited to Android, Linux, Windows, and Huawei HarmonyOS, which is used to control and coordinate display devices and peripheral devices, allowing various independent hardware components in the display device to work together as a stable whole. The display device includes at least one display screen, and the display screen may be an LED display screen, an LCD display screen, an OLED display screen, that is, display devices including LED display devices, LCD display devices, OLED display devices, etc. may all be used to implement this solution. For example, the display device is equipped with a touch sensitive display screen, also known as a touch sensitive display screen.

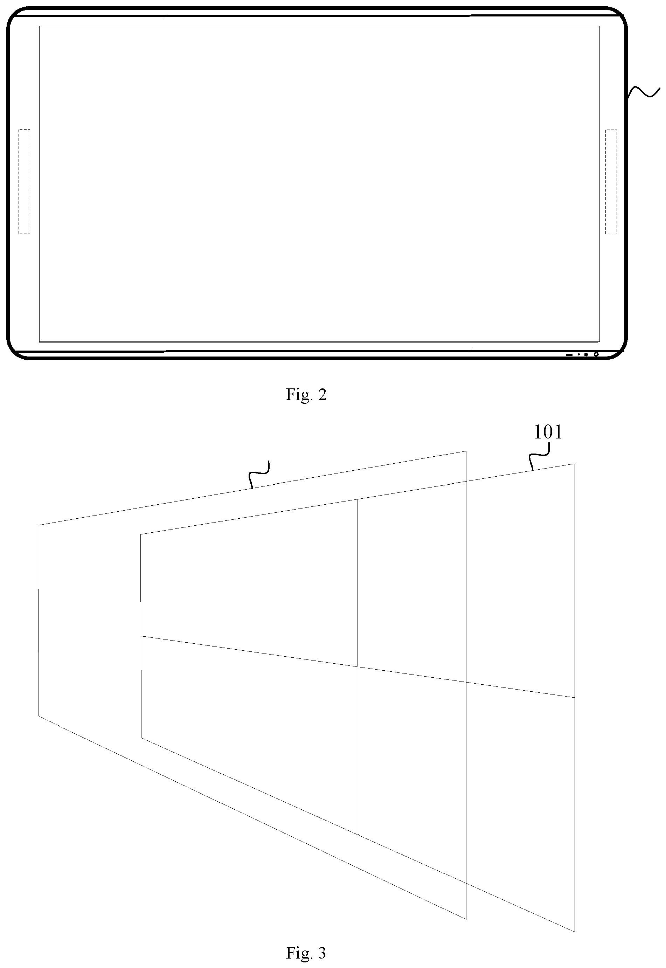

Common touch modules include resistive touch modules, capacitive touch modules, infrared touch modules, electromagnetic touch modules, etc. These touch modules all have clear touch detection boundaries determined by hardware. The touch detection boundaries usually overlap with the boundaries displayed on the screen. Based on this boundary relationship, as shown in Fig. 3, a touch detection region 102 and a screen display region 101 have equal width and height and overlap, thus achieving touch operations within a visual region based on screen display, presenting an experience that the view is exactly the interaction of the operating object.

Display device products of which the touch detection region and the screen display region have equal width and height and overlap usually may only operate on the content currently displayed in the present disclosure window. When there is a system level operation need for the display device, it is usually necessary to exit the currently displayed application window or call up a new trigger control window for implementing system level functions, and then achieve the target operation. The above operation process is strictly limited by the contents displayed on the screen, and quick control of the display device cannot meet the diverse control requirements in multi-person communication scenarios.

As for the above technical problem, the embodiment of the present disclosure proposes that a laser radar is arranged for touch detection on a display device. The scanning surface of the laser radar is larger than the display surface of the display device, which may scan regions outside the display surface. On the basis of the detection range of the laser radar that is not restricted by the display surface, when the function of extending the touch region is enabled, a second touch region is additionally determined in the region outside the display surface. Through the first touch region and the second touch region, the touch operations detected in the corresponding region on the display surface and the touch operations detected outside the display surface are processed separately, thereby breaking through the limitations of the contents displayed on the screen and achieving interactive operations in non-screen display regions. These interactive operations may meet the rich and diverse control requirements in multi-person communication scenarios.

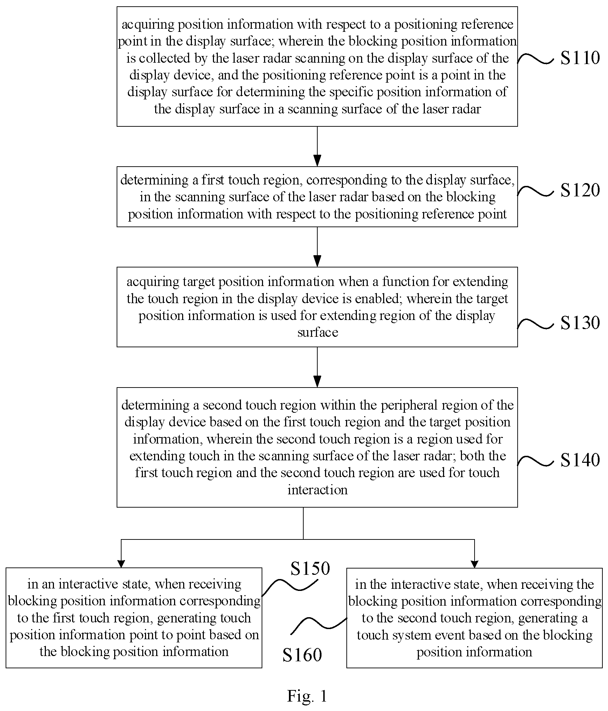

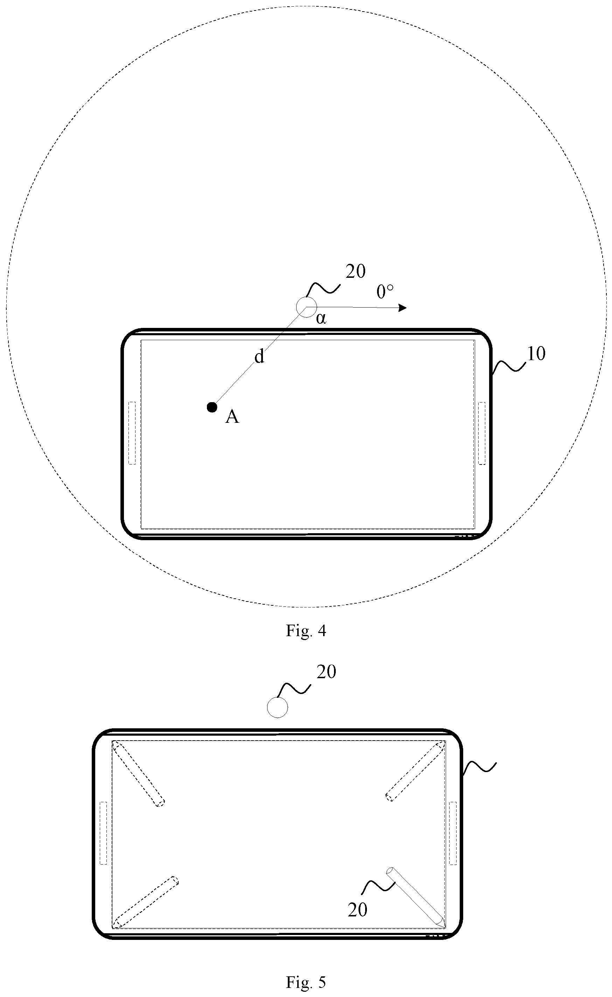

Fig. 1 is a flowchart of a touch extending interaction method according to an embodiment of the present disclosure, which is exemplarily applied to the display device 10 shown in Fig. 4. The display device 10 includes a laser radar 20, and the scanning surface of the laser radar 20 covers the display surface of the display device 10. During the operation of the laser radar 20, a laser transceiver (including transmitter and receiver) is driven by a motor to continuously rotate (the maximum rotation angle may reach 360°, and it always maintains clockwise or counterclockwise rotation, or alternately rotates clockwise and counterclockwise within a certain angle range). The transmitter continuously emits laser during the rotation process, and the laser will reflect when it encounters surrounding obstacles, which will be detected by the receiver. The laser radar 20 may determine a position of the obstacle relative to the laser radar 20 based on emission time and an emission angle of the transmitter, and reception time of the receiver. The transmitter rotates around the rotation axis and emits laser perpendicular to the rotation axis. The laser emitted by rotating around the rotation axis may determine a plane, which is the scanning surface in the embodiment of the present disclosure. **In** an actual installation environment of the display device 10 and the laser radar 20, there must be a static obstacle that blocks the propagation of laser and causes laser reflection, and the actual detectable scanning surface is a limited planar area. The display surface in this embodiment of the present disclosure refers to a flat region of the display screen of the display device when displaying the image. For a display device, the display surface remains unchanged.

When the display device 10 and the laser radar 20 are installed, their relative installation positions may be directly installed based on the production design, or the laser radar 20 may be flexibly installed near the display device 10 according to the on-site environment. During installation, the display device 10 may be installed on a floor stand or fixed to a wall, with a display surface parallel to the vertical direction after installation. The installation of the laser radar 20 is determined by the installation position of the display device 10. It is necessary to ensure that the scanning surface is as parallel as possible to the display surface, and the distance between the two is as close as possible. The scanning surface should be located on an outer side of the display surface (a side where a main body of the display device 10 is located is the inner side) for user operation. The scanning surface of the laser radar 20 covers the display surface of the display device 10. The scanning surface of the laser radar covering the display surface of the display device specifically refers to, when the two are parallel, a projection of the display surface in the scanning surface is completely within the scanning surface. The display device 10 and the laser radar 20 installed based on the relationship between the display surface and the scanning surface can ensure accurate detection of corresponding position information for objects close to the display surface and nearby, and can avoid mis-detection when the distance between the object and the display surface is large.

Whether the display device 10 and the laser radar 20 are directly installed based on the production combination design or flexibly installed separately according to the on-site environment, the laser radar 20 needs to be connected to the display device 10 through a data link, specifically referring to a processor connected to the display device 10. The data link may be a wireless communication link such as Bluetooth, or a wired communication link established through Universal Serial Bus Human Interface Device (USB-HID) protocol based on USB wired connection. The USB wired connection may be used upon being plugged after installation.

The diagram shown in Fig. 4 is an exemplary installation position relationship between the display device 10 and the laser radar 20. The laser radar 20 is installed directly above the display device 10, and the scanning surface centered on the emitter of the laser radar 20 is represented by a dashed circle in Fig. 4. The display device 10 is located entirely within the scanning surface, ensuring that the scanning surface covers the display surface. In specific implementation, the laser radar 20 may be arranged in other directions of the display device 10 according to the size of the installation environment, the layout of other electronic devices, etc., to ensure that the laser transceiver may detect touch objects near or in contact with the display surface.

The touch extending interactive method in the embodiment of the present disclosure may be regarded as a composite implementation of the method for determining touch region and the touch method. That is, in the embodiment of the touch extending interaction method, the detection capability based on the laser radar is described in detail. In the case where touch extending is needed, the first touch region and the second touch region are determined with the display surface of the display device as a reference, and then different touch responses are made based on the blocking position information detected in the first touch region and the second touch region.

As shown in Fig. 1, the touch extending interaction method includes but is not limited to steps S110 to S160.

Step S110: acquiring position information with respect to a positioning reference point in the display surface; where the blocking position information is collected by the laser radar scanning on the display surface of the display device, and the positioning reference point is a point in the display surface for determining the specific position information of the display surface in a scanning surface of the laser radar.

According to the embodiment of the present disclosure, when the display device is powered on, the laser radar starts to operate. During the operation of laser radar, the transmitter continuously rotates around the axis of rotation, and different types of laser radars have their fixed rotation periods. The laser is emitted from an end of the transmitter that is far away from the rotation axis. A scanning period of laser emitted by the transmitter is different from the rotation period. Specifically, the scanning period of the transmitter is smaller than the rotation period. For example, one rotation period may correspond to multiple scanning periods, that is, the transmitter may emit multiple laser beams after rotating for one period. If a certain emitted laser beam is blocked, the emitted laser beam is reflected back by the blocking object and received. Based on the propagation speed of the laser beam and the time difference between emission and reception, the distance of the blocking object relative to the laser radar and the angle of the laser beam emitted by the laser radar may be acquired, and the orientation of the blocking object relative to the laser radar may be acquired, and the corresponding blocking position information of the blocking object based on the position of the laser radar may be acquired. The display device may process all blocking position information.

The data directly collected by the laser radar 20 is angle and distance information, which is equivalent to the detection principle of detection for emission around the center of the laser radar emitter in the scanning plane. A polar coordinate system with the position of the rotation axis as the pole is constructed, for example, in Fig. 4, the polar coordinate system has the horizontal right axis as the polar axis. In the scanning state shown in Fig. 4, during a certain scanning cycle, due to the obstacle at point A, the distance d between the pole and point A, as well as the small angle $\alpha$ between the line connecting the pole and point A and the polar axis, were collected. **In** a Cartesian coordinate system with the pole as the origin (referring to the Cartesian coordinate system corresponding to the display plane in the horizontal and vertical directions), the horizontal and vertical coordinates x and y of the obstacle at point A may be calculated based on the distance d and angle $\alpha$, and used as the blocking position information to describe the position of the obstacle. A specific calculation formulas for the x-axis and y-axis are as follows:

$$x = d * \cos\alpha$$

$$y = d * \sin\alpha$$

In one embodiment, because the display device 10 and the laser radar 20 are installed on site, and the laser radar 20 collects blocking position information through optical scanning, initial information used to determine blocking position information is based on the position information of the laser radar 20 as a reference. In the display device 10, there is another coordinate system on the display surface used to determine the position information of display pixels in the display surface. After the installation of display device 10 and the laser radar 20 on site, calibration is usually required to configure the conversion relationship between the coordinate system of the display surface in display device 10 and the coordinate system of the laser radar 20, in order to determine the coordinates carried in the detected blocking position information. The coordinates corresponding to the same position in the coordinate system of the display surface in display device 10 may be used to detect blocking position information in the future. In the embodiment of the present disclosure, a state in which a conversion relationship between the coordinate system of the display surface and the coordinate system of the laser radar 20 is configured is defined as a first configuration state, corresponding to various detailed operations required to implement the configuration. The first configuration state includes displaying reference-point touch guidance for guiding the positioning reference points in the touch display surface, and the reference-point touch guidance includes an order of touching the positioning reference points. In the state of displaying the reference-point touch guidance, the blocking position information acquired from the laser radar is associated with the positioning reference point based on the touch order to acquire specific processing details such as blocking position information with respect to the positioning reference point. The first configuration state may be entered when installing the display device 10 and the laser radar 20 for initial configuration, or it may be entered after a period of use due to changes in the position of the display device 10 or laser radar 20, or when the user finds that the touch position does not match the response result and needs to perform configuration correction. The specific way to enter may be through a dedicated system settings portal, voice commands, button commands, gesture commands, etc.

For the display surface presented as a rectangle in the display device 10, it is considered that the display device 10 is usually arranged in a way where the long side is parallel to the ground and the short side is perpendicular to the ground, and the coordinate system used to characterize any display position in the display surface is usually based on the intersection of a long side direction and a short side direction as the origin, with the long side direction and the short side direction as the horizontal and vertical axes, respectively. In order to facilitate the subsequent conversion of the coordinates in the display surface with the coordinates carried in the blocking position information detected by the laser radar 20, when installing the laser radar 20, the polar axis of the laser radar 20 may be parallel to the long or short side direction of the display device 10.

In the case where the display device 10 is arranged in a manner where the long side is parallel to the ground and the short side is perpendicular to the ground, it is necessary to complete the calibration of the corresponding position of the display surface in the coordinate system of the laser radar 20, that is, to determine the region range of the first touch region in the coordinate system of the laser radar 20, at least two positioning reference points need to be known, and these two positioning reference points are the position information of two vertexes located on the same diagonal of the display surface (i.e., the positioning reference points include at least two vertexes on a diagonal of the display surface). Under the arrangement described above, the positioning reference points may also be combined in other manner, such as using the midpoint of the four sides of the rectangular display surface as the positioning reference point, or using any non-vertex point on the four sides of the rectangular display surface as the positioning reference point. For the detected coordinates corresponding to the positioning reference points on the two horizontal sides, the horizontal coordinates are taken as the horizontal coordinates of the upper and lower sides of the rectangular display surface; for the coordinates detected corresponding to the positioning reference points on the two sides perpendicular to the ground, the vertical coordinates are taken as the vertical coordinates of the left and right sides of the rectangular display surface. Based on the horizontal coordinates of the upper and lower sides and the vertical coordinates of the left and right sides, the region range of the first touch region may be determined. The coordinates detected corresponding to the positioning reference point as mentioned above refer to the coordinates detected by the laser radar 20 and carried in the touch point position information when the user performs single touch guidance based on the reference point touch. That is, the positioning reference point is a point on the display surface for determining the specific position information of the display surface in the scanning surface.

It should be understood that in the first configuration state, it is necessary to accurately correspond the received blocking position information to the positioning reference point. Therefore, in the reference-point touch guidance, a clear touch order should be indicated, and the user should touch the positioning reference in sequence based on the touch order. Each touch generates an blocking position information, and the display device associates the received blocking position information with the positioning reference point in the touch order. For example, if there are four positioning reference points, when displaying touch guidance for the reference points, each positioning reference point will display a circular symbol. The circular symbols will display four numbers, 1-4, indicating the order of touch. At the same time, instructions for touching in order will be displayed. The user will touch in order according to the instructions, and the display device will acquire four blocking position information, which will be associated with the positioning reference points in order 1-4, thus completing the acquisition of blocking position information for the positioning reference points.

Step S120: determining a first touch region, corresponding to the display surface, in the scanning surface of the laser radar based on the blocking position information with respect to the positioning reference point.

After acquiring the blocking position information with respect to the positioning reference point, the conversion relationship between the coordinate system of the laser radar and the coordinate system of the display surface is determined based on the blocking position information with respect to the positioning reference point; the target positions of respective vertexes of the display surface in the coordinate system of the laser radar are determined based on the conversion relationship; the first touch region, corresponding to the display surface, in the scanning surface of the laser radar based on the blocking position information with respect to the positioning reference point is determined based on the target positions of the respective vertexes. For example, the coordinate system (pixel coordinates) of the display surface takes the upper left corner as the origin (0,0), the vertex coordinates of the upper right corner as (1600,0), and the vertex coordinates of the lower right corner as (16001200), and all three points are positioning reference points. In the first configuration state, the detected blocking position information corresponding to the above-mentioned positioning reference points are (-45,-33), (-5,-33), and (-5,-63), respectively. Based on the geometric corner relationship of the rectangle, the coordinates of the fourth vertex of the first touch region may be determined (-45,-63). Then, it may be determined that the region with (-45,-33), (-5,-33), (-5,-63), and (-45,-63) as vertexes in the coordinate system of the laser radar is the first touch region. The coordinate transformation of the overlapping region in two coordinate systems may be achieved by using relevant conventional processing manners. For example, in the subsequent interactive state, if the blocking position information with coordinates of (-25,-48) is detected, the corresponding coordinates of the touch target in the display surface may be determined to be (800, 600) based on the transformation relationship, which will not be elaborated here. The embodiment of the present disclosure realizes the corresponding conversion between two coordinate systems as the basis for subsequent interactive implementation.

If the installation between the display device 10 and the laser radar 20 is not in accordance with the requirements of the long side being parallel to the ground and the short side being perpendicular to the ground as described above, at least three positioning reference points (which may be any three vertexes of the rectangular display surface) are required to complete the process of determining the range of the first touch region. Of course, in the specific implementation, the positioning reference points may also be combined in other manners, as long as these positioning reference points may uniquely determine a rectangle. For example, any two points on each side of the rectangular display surface may be determined according to the order of touching the reference points. For the two points on the same side, it may be determined which side each coordinate corresponds to. The straight line where this edge is located, and the two points on each edge may determine a total of four straight lines. The enclosed region enclosed by four straight lines is the range of the first touch region. In the case where the first touch region has been determined, that is, the range of the display surface in the coordinate system of the laser radar 20 has been determined, the conversion process of converting the blocking position information in the first touch region into coordinates in the display surface may refer to the solution of using the laser radar 20 as a touch detection module to achieve touch interaction control in related technologies.

The display device 10 itself may not independently indicate and detect the positioning reference point, and needs to guide the user to operate the display device 10. The specific operation content is the reference-point touch guidance. The reference-point touch guidance may guide users to use touch objects to locate reference points. For example, as shown in Fig. 5, the reference-point touch guidance guides users to use a writing pen 30 (or finger, etc.) to sequentially touch the vertexes of the upper left, upper right, lower left, and lower right of the display surface, and acquire four corresponding blocking position information, which are the positions of the four vertexes of the rectangular display surface. The positions of these four vertexes may represent the region range of the first touch region corresponding to the display surface. After completing the configuration, the blocking position information detected by the laser radar 20 may be compared with the coordinates of the four vertexes to determine whether it is in the first touch region. The specific comparison process with the four vertexes may refer to the specific example explanation in the following text.

Step 130: acquiring target position information when a function for extending the touch region in the display device is enabled; where the target position information is used for extending region of the display surface.

According to the embodiment of the present disclosure, the display device may be used only based on the first touch region and according to existing touch design. When using display device 10, users are usually located in the vicinity of the display device 10. In addition to maintaining direct operation on the display surface in related technologies, the function for extending the touch region may also be configured. When this function is enabled, target position information may be acquired. This target position information is used to determine a fixed region outside the display surface that does not intersect with the display surface. Based on the layout relationship between the display surface and the scanning surface described above, the laser radar may detect the corresponding blocking position information when an object appears in this fixed region.

According to the embodiment of the present disclosure, the detection range of the laser radar 20 is not constrained by the display surface, and may be extended outward based on the display surface. The basis for extending the display region is the target position information, and the target position information is used to describe the direction and scale of the touch region extending. For example, if a certain conference room is relatively small, coupled with other electronic devices, the region near display device 10 is no longer extending in all directions. At this time, it is possible to extend the region only in one or two suitable directions, which may be one or multiple directions. Overall, the extending direction may include at least one of the left, right, and lower sides of the display surface. Due to the fact that the upper side of the display surface is usually not suitable for user operation, it is possible to consider not extending the region on the upper side. Of course, extending the region on the upper side does not deviate from the design concept of this solution.

The specific timing for enabling this function may be when the display device automatically activates when the laser radar is installed. For example, by default, this function is enabled to directly acquire the target position information, that is, the display device and the laser radar are extended in the region after installation until the function is disabled. It may also be selectively activated by the user when the laser radar is first installed on the display device, for example, reminding the user whether to enable the function before and after the first configuration state. It may also be activated by the user at any time during the use of the display device. The activation manner may be set through dedicated system entry, voice commands, button commands, gesture commands, etc., which are not specifically limited here.

The manner to acquire the target position information may be to acquire a preset position parameter for extending region of the display surface as the target position information, that is, the target position information is acquired by directly reading (from the preset storage space) or receiving (by the user operating on the display device or inputting through another electronic device); or by collecting spatial position information of the display device in an actual usage scenario; or by generating the target position information based on the spatial position information, that is, the target position information is determined based on the installation state or display device installation environment in the actual usage scenario.

In a more specific implementation, the acquiring a preset position parameter for extending region of the display surface as the target position information, for example, may be of reading the position parameter for extending region of the display surface from a preset parameter configuration file as the target position information; or displaying an adjustment interface for configuring a parameter of extending the touch region. On the basis of determining the first touch region, it is possible to receive user operations on the adjustment interface, in response to a target parameter value of the parameter received in the adjustment interface, acquiring the position parameter for extending region of the display surface as the target position information. Touch extending requirements of the user can be met in various manners through preset suitable position parameters or position parameters input by the user.

In another more specific implementation, the generating the target position information based on the spatial position information includes: determining spatial distance information of the display device from blocking objects on the upper, lower, left, and right sides in the actual usage scenario based on the spatial position information; and generating the target position information by combining the size of the display surface of the display device with the spatial distance information. The laser radar used in conjunction with the display device can accurately detect the installation environment of the display device. For example, when the left or right side of the display device is installed close to a wall, that is, there is no space for user operation on the left or right side, only the other side may be determined as the extending direction. For example, when peripheral devices such as cameras and/or speakers are installed closely above one side of the display device, it may be determined that this side of the display device is partially extended. By determining the target position information through the installation state of the display device in the actual scenario, it is possible to ensure that the generated second touch region can be realized in the actual scenario, and ensure the normal completion of touch extending.

Step 140: determining a second touch region within the peripheral region of the display device based on the first touch region and the target position information, where the second touch region is a region used for extending touch in the scanning surface of the laser radar; both the first touch region and the second touch region are used for touch interaction.

Based on the target position information, region extending may be performed in the peripheral region of the display device, and the corresponding region for extending touch may be acquired, which is the second touch region. Depending on the number of extending directions, the second touch region may be one or multiple. Each second touch region may be a rectangle, and the corresponding position of each second touch region may be represented by four vertexes based on the first touch region, or by a vertex coordinate plus width and height. For example, the second touch region of a rectangle may be represented as $(x, y, w, h)$, where $x$ and $y$ come from the coordinates of the top left vertex of the second touch region $(x, y)$, $w$ comes from the width value of the second touch region, and $h$ comes from the height value of the second touch region. Of course, the first touch region may also be represented by a vertex coordinate plus width and height. The specific representation of the location of the first touch region and any second touch region according to the embodiment of the present disclosure is not limited.

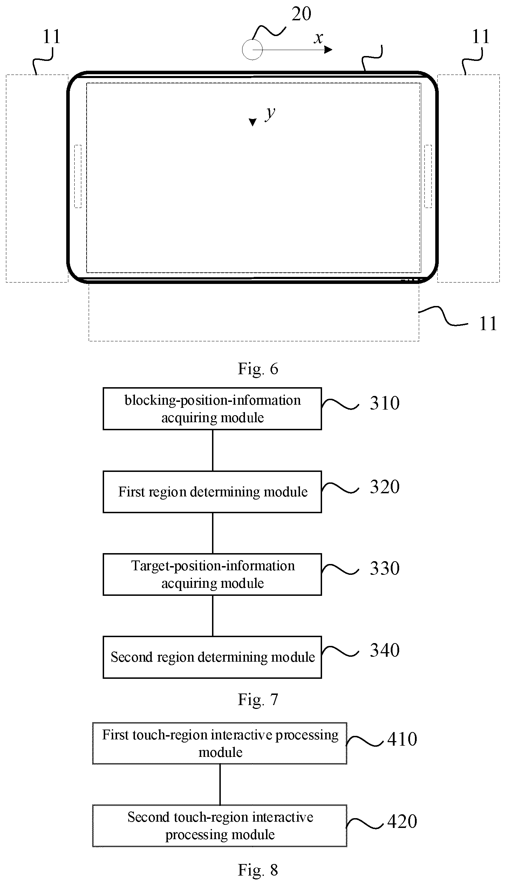

The size of the second touch region in different directions may be the same or different, for example, the left and right sides are the same, that is, the size of the second touch region on the left side and the second touch region on the right side are the same. It may also be different on the left, right, and lower sides, that is, the size of the second touch region on the left, right, and lower sides are different. In the distribution diagram of the first touch region and the second touch region 11 shown in Fig. 6, three second touch regions 11 are exemplarily distributed on the left, right, and lower sides of the first touch region, corresponding to the second touch region on the left, the second touch region on the right, and the second touch region on the lower side, respectively. The size of the second touch region on the left and the second touch region on the right are the same.

When extending the region, the second touch region is determined in different ways manners based on the different target position information. In an optional implementation, determining an extending direction and an extending distance for extending region of the display surface based on the target position information; and translating the first touch region along the extending direction for the extending distance from a side of the first touch region corresponding to the extending direction, to obtain the extending touch region covered by the translation as the second touch region. For example, as shown in Fig. 6, it may be regarded as translating the first touch region along the extending direction for the extending distance from a side of the first touch region corresponding to the extending direction, to obtain the extending touch region covered by the translation as the second touch region.

In another alternative implementation, determining an extending direction and an extending area for extending region of the display surface based on the target position information; and extending the first touch region along the extending direction according to the extending area to obtain the extending touch region within the peripheral region of the display device in the scanning surface of the laser radar as the second touch region. For example, in Fig. 6, it may be regarded as translating the first touch region along the extending direction for the extending distance from a side of the first touch region corresponding to the extending direction, to obtain the extending touch region covered by the translation as the second touch region.

It should be understood that the "extending" described in the specific region extending process is only used to illustrate the relative positional relationship between the second touch region and the first touch region, and does not necessarily mean that the display device must control the movement of a certain graphic element during specific processing. It may be directly converted based on the specific parameters determined in the target position information and the position of the first touch region as a reference. For example, as shown in Fig. 6, the vertex coordinates of the first touch region are $(x_a, y_a)$, $(x_b, y_b)$, $(x_c, y_c)$, and $(x_d, y_d)$ in a clockwise direction from the top left vertex, with an extending direction to the right and an extending distance of $xe$. Then, the corresponding vertex coordinates of the second touch region in a clockwise direction from the top left vertex are $(x_b, y_b)$, $(x_b+x_e, y_b)$, $(x_c+x_e, y_c)$, and $(x_c, y_c)$.

Step 150: in an interactive state, when receiving blocking position information corresponding to the first touch region, generating touch position information point to point based on the blocking position information.

Step 150: in the interactive state, when receiving the blocking position information corresponding to the second touch region, generating a touch system event based on the blocking position information.

After completing the configuration of the first touch region and the second touch region, the display device may be used normally in the future, and the state of normal use of the display device is defined as the interactive state. In the interactive state, the laser radar 20 may detect all obstacles within the laser propagation range and collect corresponding blocking position information. During the processing of the blocking position information, only the blocking position information of the first and second areas may be further processed. For blocking position information of other regions, it does not need to be processed or responded to on the display device, and may be directly discarded. At the level of users' actual actions, each touch operation may result in physical contact between the touch object and the display device (such as contact between a writing pen and the display device), or appear in a position outside the display device (such as passing through the air around the display device placed on a stand, or passing through the adjacent wall of the display device installed on a wall). These touch operation states may correspond to touch points that are relatively fixed and may be regarded as point shape, or touch trajectory formed by the movement of touch points. For the touch points or touch trajectories that appear in these touch operation states, at the specific data processing level, the laser radar will detect one or more blocking position information, and whether the coordinates carried by each blocking position information are within the first touch region or a certain second touch region may refer to the judgment logic in related technologies, such as comparing the size relationship between the two coordinate components carried by the blocking position information and the coordinate components of the four vertexes of the first touch region (or the second touch region). If the first touch region (or the second touch region) is represented by a vertex coordinate and width/height, the relationship between the coordinate components carried by the blocking position information and the corresponding coordinate components of the vertex and the sum of width (or height) may also be determined by comparing them. A touch system event refers to a touch operation event used to trigger a certain function at the system level of a display device. For example, when it is determined to slide left based on the blocking position information, the touch system event corresponds to a left slide event. Different systems may have different response logics for the left slide event, and each system may respond according to its own response logic.

In the interactive state, when receiving the blocking position information corresponding to a certain second touch region, determining multiple blocking position information having same change trend of the same coordinate component and change amount within a preset range as a touch system event, and determining a type of the touch system event based on the change trend. The types of touch system events include one or more of a sliding-up event, a sliding-down event, a sliding-left event, a sliding-right event, and a long-press event.

In the determination process of touch system events mentioned above, specific coordinates may be used as an example for illustration. Assuming a series of recorded touch coordinates are $(x_1, y_1)$, $(x_2, y_2)$, $(x_3, y_3)$... $(x_i, y_i)$... $(x_n, y_n)$, a threshold D is set.

If the recorded touch coordinates meet the following conditions, it indicates that the sliding is up and down, and the sliding process is continuous. The change in the vertical component of adjacent touch coordinates is within the threshold (i.e. preset range).

$$|y_2 - y_1| < D$$

$$|y_3 - y_2| < D$$

$$|y_4 - y_3| < D$$

$$... ...$$

$$|y_n - y_{n-1}| < D$$

If $y_i - y_{i-1} > 0$, it belongs to sliding down; if $y_i - y_{i-1} < 0$, it belongs to sliding up, that is, the trend of change is the same.

Similarly, if the recorded touch coordinates meet the following conditions, it indicates a left or right sliding.

$$|x_2 - x_1| < D$$

$$|x_3 - x_2| < D$$

$$|x_4 - x_3| < D$$

$$... ...$$

$$|x_n - x_{n-1}| < D$$

If $x_i - x_{i-1} > 0$, it belongs to right sliding; if $x_i - x_{i-1} < 0$, it belongs to left sliding.

After parsing the user gesture, corresponding events may be sent to the system, such as: a gesture of sliding up corresponding to sliding up action, a gesture of sliding down corresponding to sliding down action, a gesture of sliding left corresponding to return (equivalent to **Back** button event), a gesture of sliding right corresponding to return to home page (equivalent to **Home** button event).

If a width of the display screen is **W,** the height is **H,** and the displacement of each movement is **d,** the specific event details may be sent when sending touch system events. For example, the up sliding action sent to the system may be implemented as follows:

Sending touch **UP** event with coordinates of (W/2, H/2)
Sending touch **UP** event with coordinates of (W/2, H/2-d)
Sending touch **UP** event with coordinates of (W/2, H/2-d*2)
Sending touch **UP** event with coordinates of (W/2, H/2-d*3)
••••••

Sending touch **UP** event.

The sliding action sent to the system may be implemented as follows:

Sending touch **DOWN** event, coordinates are (W/2, H/2)
Sending touch **DOWN** event with coordinates of (W/2, H/2+d)
Sending touch **DOWN** event with coordinates of (W/2, H/2+d * 2)
Sending touch **DOWN** event with coordinates of (W/2, H/2+d * 3)
••••••
Sending touch **DOWN** event.

Of course, when sending touch system events, it may also refer to sending a finally determined type of the event, such as only sending touch **UP** events and touch **DOWN** events, and the intermediate detail events only used to determine the type of the final touch system event. Other types of touch system events may be determined by referring to the event determineation manner in the field of interaction.

While determining the first and second touch regions in the configuration state, the conversion relationship between the coordinate system of the laser radar and the coordinate system of the display surface has been established; when receiving the blocking position information corresponding to the first touch region, each blocking position information is converted based on the conversion relationship to generate corresponding touch position information. This processing manner converts the blocking position information detected in the coordinate system of the laser radar into the touch position information in the coordinate system of the display surface (i.e. image coordinate system). In the case where the two coordinate systems are parallel, the blocking position information may be acquired by the displacement change of the two coordinate components and the conversion of the unit length to acquire the corresponding touch position information. On the basis of determining the conversion relationship between the coordinate system of the laser radar and the coordinate system of the display surface in the configuration state, in the interactive state, processing may be directly carried out based on the conversion relationship to improve interaction efficiency and accuracy.

For the blocking position information of different location regions, it can be processed based on the interaction logic required by the display device. For example, touch position information may be used to generate handwriting and trigger page-turning based on interaction in related technologies. For touch system events, the display content of the display surface is changed based on the response logic, such as returning to the desktop, returning to the previous page, etc. The specific definition of the corresponding system functions is not the focus of the description of the embodiment of the present disclosure and will not be elaborated.

The embodiment of the present disclosure provides a method for determining touch region, being applied to a display device, where the display device is provided with at least one laser radar, the laser radar is configured to scan a display surface of the display device and a peripheral region of the display device, the method for determining touch region includes but is not limited to steps S210-S240.

Step S210: acquiring position information with respect to a positioning reference point in the display surface; where the blocking position information is collected by the laser radar scanning on the display surface of the display device, and the positioning reference point is a point in the display surface for determining the specific position information of the display surface in a scanning surface of the laser radar.

Step S220: determining a first touch region, corresponding to the display surface, in the scanning surface of the laser radar based on the blocking position information with respect to the positioning reference point.

Step S230: acquiring target position information when a function for extending the touch region in the display device is enabled; where the target position information is used for extending region of the display surface.

Step S240: determining a second touch region within the peripheral region of the display device based on the first touch region and the target position information, where the second touch region is a region used for extending touch in the scanning surface of the laser radar; both the first touch region and the second touch region are used for touch interaction.

On the basis of the above embodiments, the acquiring position information with respect to a positioning reference point in the display surface includes:

displaying reference-point touch guidance for guiding to touch the positioning reference point in the display surface, where the reference-point touch guidance includes an order of touching the positioning reference points; and
in a state of displaying the reference-point touch guidance, associating the blocking position information acquired from the laser radar with the positioning reference point in the touch order to acquire the blocking position information with respect to the positioning reference point.

On the basis of the above embodiment, the determining a first touch region, corresponding to the display surface, in the scanning surface of the laser radar based on the blocking position information with respect to the positioning reference point includes:

determining a conversion relationship between a coordinate system of the laser radar and a coordinate system of the display surface based on the blocking position information with respect to the positioning reference point;
determining the target position of respective vertexes of the display surface in the coordinate system of the laser radar based on the conversion relationship; and
determining the first touch region, corresponding to the display surface, in the scanning surface of the laser radar based on the target position of the respective vertexes.

On the basis of the above embodiments, the acquiring target position information includes:

acquiring a preset position parameter for extending region of the display surface as the target position information;
or,
collecting spatial position information of the display device in an actual usage scenario; and
generating the target position information based on the spatial position information.

On the basis of the above embodiment, the acquiring a preset position parameter for extending region of the display surface as the target position information includes:

reading the position parameter for extending region of the display surface from a preset parameter configuration file as the target position information;
or,
displaying an adjustment interface for configuring a parameter of extending the touch region; and
in response to a target parameter value of the parameter received in the adjustment interface, acquiring the position parameter for extending region of the display surface as the target position information.

On the basis of the above embodiments, the generating the target position information based on the spatial position information includes:

determining spatial distance information of the display device from blocking objects on the upper, lower, left, and right sides in the actual usage scenario based on the spatial position information; and
generating the target position information by combining the size of the display surface of the display device with the spatial distance information.

On the basis of the above embodiment, the determining a second touch region within the peripheral region of the display device based on the first touch region and the target position information includes:

determining an extending direction and an extending distance for extending region of the display surface based on the target position information; and translating the first touch region along the extending direction for the extending distance from a side of the first touch region corresponding to the extending direction, to obtain the extending touch region covered by the translation as the second touch region.

On the basis of the above embodiment, the determining a second touch region within the peripheral region of the display device based on the first touch region and the target position information includes:

determining an extending direction and an extending area for extending region of the display surface based on the target position information; and extending the first touch region along the extending direction according to the extending area to obtain the extending touch region within the peripheral region of the display device in the scanning surface of the laser radar as the second touch region.

On the basis of the above embodiment, the positioning reference point includes at least two vertexes on a diagonal of the display surface.

On the basis of the above embodiments, the extending direction includes at least one of left, right, and lower sides.

The specific implementation process of the above method for determining touch region may refer to the corresponding description of the touch extending interaction method in the previous embodiments, and will not be repeated here.

The embodiment of the present disclosure provides a touch method, being applied to a display device, where an interactive region of the display device includes a first touch region and a second touch region determined by any one of the method for determining touch regions in the first aspect; the touch method includes but is not limited to steps S310 and S320.

Step S310: in an interactive state, when receiving blocking position information corresponding to the first touch region, generating touch position information point to point based on the blocking position information.

Step S320: in the interactive state, when receiving the blocking position information corresponding to the second touch region, generating a touch system event based on the blocking position information.

On the basis of the above embodiments, the types of touch system events include one or more of a sliding-up event, a sliding-down event, a sliding-left event, a sliding-right event, and a long-press event.

On the basis of the above embodiment, in the interactive state, when receiving the blocking position information corresponding to the second touch region, generating a touch system event based on the blocking position information includes:

in the interactive state, when receiving the blocking position information corresponding to the second touch region, determining multiple blocking position information having same change trend of the same coordinate component and change amount within a preset range as a touch system event, and determining a type of the touch system event based on the change trend.

The specific implementation process of the above touch method may refer to the corresponding description in the previous embodiments of touch extending interaction method, and will not be repeated here.

Fig. 7 is a diagram of a structure of an apparatus for determining touch region according to an embodiment of the present disclosure. The apparatus for determining touch region is applied to a display device, where the display device is provided with at least one laser radar, the laser radar is configured to scan a display surface of the display device and a peripheral region of the display device. As shown in Fig. 7, the apparatus for determining touch region includes a blocking-position-information acquiring module 310, a first region determining module 320, a target-position-information acquiring module 330, and a second region determining module 340.

The blocking-position-information acquiring module 310 is configured to acquire position information with respect to a positioning reference point in the display surface; where the blocking position information is collected by the laser radar scanning on the display surface of the display device, and the positioning reference point is a point in the display surface for determining the specific position information of the display surface in a scanning surface of the laser radar. The first region determining module 320 is configured to determine a first touch region, corresponding to the display surface, in the scanning surface of the laser radar based on the blocking position information with respect to the positioning reference point. The target-position-information acquiring module 330 is configured to acquire target position information when a function for extending the touch region in the display device is enabled; where the target position information is used for extending region of the display surface. The target position information is used for extending region of the display surface; The second region determining module 340 is configured to determine a second touch region within the peripheral region of the display device based on the first touch region and the target position information, where the second touch region is a region used for extending touch in the scanning surface of the laser radar; both the first touch region and the second touch region are used for touch interaction.

On the basis of the above embodiment, the acquiring position information with respect to a positioning reference point in the display surface includes:

displaying reference-point touch guidance for guiding to touch the positioning reference point in the display surface, where the reference-point touch guidance includes an order of touching the positioning reference points; and

in a state of displaying the reference-point touch guidance, associating the blocking position information acquired from the laser radar with the positioning reference point in the touch order to acquire the blocking position information with respect to the positioning reference point.

On the basis of the above embodiment, the determining a first touch region, corresponding to the display surface, in the scanning surface of the laser radar based on the blocking position information with respect to the positioning reference point includes:

determining a conversion relationship between a coordinate system of the laser radar and a coordinate system of the display surface based on the blocking position information with respect to the positioning reference point;
determining the target position of respective vertexes of the display surface in the coordinate system of the laser radar based on the conversion relationship; and
determining the first touch region, corresponding to the display surface, in the scanning surface of the laser radar based on the target position of the respective vertexes.

On the basis of the above embodiments, the acquiring target position information includes:

acquiring a preset position parameter for extending region of the display surface as the target position information;
or,
collecting spatial position information of the display device in an actual usage scenario; and
generating the target position information based on the spatial position information.

On the basis of the above embodiments, the acquiring a preset position parameter for extending region of the display surface as the target position information includes:

reading the position parameter for extending region of the display surface from a preset parameter configuration file as the target position information;
or,
displaying an adjustment interface for configuring a parameter of extending the touch region; and
in response to a target parameter value of the parameter received in the adjustment interface, acquiring the position parameter for extending region of the display surface as the target position information.

On the basis of the above embodiments, the generating the target position information based on the spatial position information includes:

determining spatial distance information of the display device from blocking objects on the upper, lower, left, and right sides in the actual usage scenario based on the spatial position information; and
generating the target position information by combining the size of the display surface of the display device with the spatial distance information.

On the basis of the above embodiment, the determining a second touch region within the peripheral region of the display device based on the first touch region and the target position information includes:

determining an extending direction and an extending distance for extending region of the display surface based on the target position information; and
translating the first touch region along the extending direction for the extending distance from a side of the first touch region corresponding to the extending direction, to obtain the extending touch region covered by the translation as the second touch region.

On the basis of the above embodiment, the determining a second touch region within the peripheral region of the display device based on the first touch region and the target position information includes:

determining an extending direction and an extending area for extending region of the display surface based on the target position information; and
extending the first touch region along the extending direction according to the extending area to obtain the extending touch region within the peripheral region of the display device in the scanning surface of the laser radar as the second touch region.

On the basis of the above embodiment, the positioning reference point includes at least two vertexes on a diagonal of the display surface.
On the basis of the above embodiments, the extending direction includes at least one of left, right, and lower sides.
The apparatus for determining touch region according to the embodiment of the present disclosure is included in a display device and may be used to execute the corresponding method for determining touch region according to the above embodiments, with corresponding functions and beneficial effects.
Fig. 8 is a diagram of a structure of a touch apparatus according to an embodiment of the present disclosure. This embodiment of the present disclosure provides a touch apparatus, being applied to a display device, where an interactive region of the display device includes a first touch region and a second touch region determined by any one of the method for determining touch regions in the first aspect; as shown in Fig. 8, the touch apparatus includes:

a first touch-region interaction processing module 410, configured to, in an interactive state, when receiving blocking position information corresponding to the first touch region, generate touch position information point to point based on the blocking position information; and

a second touch-region interaction processing module 420, configured to, in the interactive state, when receiving the blocking position information corresponding to the second touch region, generate a touch system event based on the blocking position information.

On the basis of the above embodiments, the types of touch system events include one or more of a sliding-up event, a sliding-down event, a sliding-left event, a sliding-right event, and a long-press event.

On the basis of the above embodiment, in the interactive state, when receiving the blocking position information corresponding to the second touch region, generating a touch system event based on the blocking position information includes:

in the interactive state, when receiving the blocking position information corresponding to the second touch region, determining multiple blocking position information having same change trend of the same coordinate component and change amount within a preset range as a touch system event, and determining a type of the touch system event based on the change trend.

It is worth noting that in the above-mentioned embodiments of the apparatus for determining touch region and touch apparatus, the various units and modules included are only divided based on functional logic, but are not limited to the above division, as long as they can achieve the corresponding functions. In addition, the specific names of each functional unit are only for ease of distinction and are not intended to limit the scope of protection of the present disclosure.

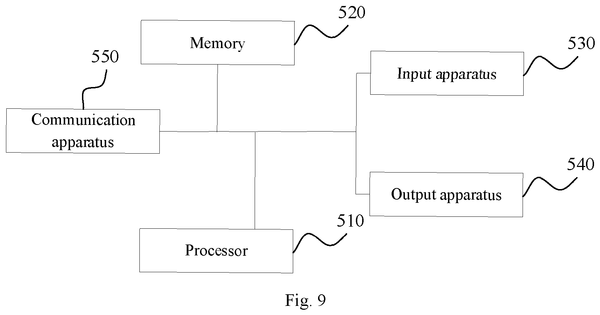

Fig. 9 is a diagram of a structure of a display device according to an embodiment of the present disclosure. As shown in Fig. 9, the display device includes a laser radar, a processor 510, and a memory 520, and may also include an input apparatus 530, an output apparatus 540, and a communication apparatus 550; the number of processors 510 in the display device may be one or more, Fig. 9 takes one processor 510 as an example; the processor 510, the memory 520, the input apparatus 530, the output apparatus 540, and the communication apparatus 550 in the display device may be connected through a bus or other means, Fig. 9 takes a connection through a bus as an example.

The memory 520, as a computer-readable storage medium, may be configured to store software programs, computer executable programs, and modules, such as the program instructions/modules corresponding to the method for determining touch region in the embodiment of the present disclosure. The processor 510 executes various functional applications and data processing of the display device by running software programs, instructions, and modules stored in the memory 520, thus achieving the above method.

The memory 520 may mainly include a storage program region and a storage data region, where the storage program region may store an operating system and at least one application program required for a function; the storage data area may store data created based on the usage of the display device. In addition, the memory 520 may include high-speed random access memory, as well as non-volatile memory such as at least one disk storage device, flash memory device, or other non-volatile solid-state storage device. In some examples, the memory 520 may further include memory remotely located relative to the processor 510, which may be connected to the display device via a network. Examples of the above networks include but are not limited to the Internet, enterprise intranet, local area network, mobile communication network and their combinations.

The input apparatus 530 may be used to receive input numerical or character information, as well as generate key signal inputs related to user settings and functional controls of the display device. The output apparatus 540 may include display devices such as a screen.

The above display device includes an apparatus for determining touch region and a touch method, which may be used to execute any method for determining touch region and touch method, and has corresponding functions and beneficial effects.

According to an embodiment of the present disclosure, a computer-readable storage medium is further provided, on which a computer program is stored. When the computer program is executed by a processor, the relevant operations in the touch extending interactive method according to any embodiment of the present disclosure are implemented, and have corresponding functions and beneficial effects.

Those skilled in the art should understand that the embodiments of the present disclosure may be provided as methods, systems, or computer program products.

Therefore, the present disclosure may take the form of an entirely hardware embodiment, an entirely software embodiment, or an embodiment combining software and hardware aspects. Moreover, the present disclosure may take the form of a computer program product implemented on one or more computer-usable storage media (including but not limited to disk storage, CD-ROM, optical storage, etc.) containing computer-usable program codes. The present disclosure is described with reference to flowcharts and/or block diagrams of methods, devices (systems), and computer program products according to embodiments of the present disclosure. It should be understood that each process and/or block in the flowchart and/or block diagram, and a combination of the processes and/or blocks in the flowchart and/or block diagram may be implemented by computer program instructions. These computer program instructions may be provided to a processor of a general-purpose computer, a special-purpose computer, an embedded processor or other programmable data processing device to produce a machine, so that the instructions executed by the processor of the computer or other programmable data processing device produce a device for implementing the functions specified in one or more processes in the flowchart and/or one or more blocks in the block diagram. These computer program instructions may also be stored in a computer-readable memory that may direct a computer or other programmable data processing device to work in a specific manner, so that the instructions stored in the computer-readable memory produce a manufactured product including an instruction device that implements the functions specified in one or more processes in the flowchart and/or one or more boxes in the block diagram. These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

In a typical configuration, a computing device includes one or more processors (CPU), input/output interfaces, network interfaces, and memory. The memory may include non-permanent memory in a computer-readable medium, random access memory (RAM) and/or non-volatile memory in the form of read-only memory (ROM) or flash RAM. The memory is an example of a computer-readable medium.

Computer-readable media include both permanent and non-permanent, removable and non-removable media that may be implemented by any method or technology for storage of information. The information may be computer-readable instructions, data structures, program modules or other data. Examples of computer storage media include, but are not limited to, phase-change random access memory (PRAM), static random access memory (SRAM), dynamic random access memory (DRAM), other types of random access memory (RAM), read-only memory (ROM), electrically erasable programmable read-only memory (EEPROM), flash memory or other memory technology, compact disk-read-only memory (CD-ROM), digital versatile disk (DVD) or other optical storage, magnetic cassettes, magnetic tape, magnetic disk storage or other magnetic storage devices, or any other non-transmission medium that may be used to store information that may be accessed by a computing device. Based on the definition in this description, computer-readable media does not include temporary computer-readable media (transitory media), such as modulated data signals and carrier waves.

It should also be noted that the terms "comprises," "includes," or any other variations thereof are intended to cover non-exclusive inclusion, such that a process, method, commodity, or apparatus that includes a series of elements includes not only those elements, but also other elements not explicitly listed, or also includes elements inherent to such process, method, commodity, or apparatus. In the absence of more constraints, an element defined by the phrase "comprises a ..." does not exclude the existence of additional identical elements in the process, method, product or apparatus comprising the element.

It should be noted that the above are only preferred embodiments and technical principles used in the present disclosure. Those skilled in the art will appreciate that the present disclosure is not limited to the specific embodiments herein, and that various obvious changes, rearrangements, and substitutions may be made by those skilled in the art without departing from the scope of protection of the present disclosure. Therefore, although the present disclosure has been described in detail through the above embodiments, the present disclosure is not limited to the above embodiments, and may include more other equivalent embodiments without departing from the concept of the present disclosure. The scope of the present disclosure is determined by the scope of the attached claims.

## Claims

1. A method for determining touch region, applied to a display device, wherein the display device is provided with at least one laser radar, the laser radar is configured to scan a display surface of the display device and a peripheral region of the display device, the method for determining touch region comprising:

   acquiring blocking position information with respect to a positioning reference point in the display surface; wherein the blocking position information is collected by the laser radar scanning on the display surface of the display device, and the positioning reference point is a point in the display surface for determining the specific position information of the display surface in a scanning surface of the laser radar;
   determining a first touch region, corresponding to the display surface, in the scanning surface of the laser radar based on the blocking position information with respect to the positioning reference point;
   acquiring target position information when a function for extending the touch region in the display device is enabled; wherein the target position information is used for extending region of the display surface; and

determining a second touch region within the peripheral region of the display device based on the first touch region and the target position information, wherein the second touch region is a region used for extending touch in the scanning surface of the laser radar; both the first touch region and the second touch region are used for touch interaction.

2. The method for determining touch region of claim 1, wherein the acquiring blocking position information with respect to the positioning reference point in the display surface comprises:

   displaying reference-point touch guidance for guiding to touch the positioning reference point in the display surface, wherein the reference-point touch guidance includes an order of touching the positioning reference points; and
   in a state of displaying the reference-point touch guidance, associating the blocking position information acquired from the laser radar with the positioning reference point in the touch order, so as to acquire the blocking position information with respect to the positioning reference point.

3. The method for determining touch region of claim 1, wherein the determining the first touch region, corresponding to the display surface, in the scanning surface of the laser radar based on the blocking position information with respect to the positioning reference point comprises:

   determining a conversion relationship between a coordinate system of the laser radar and a coordinate system of the display surface based on the blocking position information with respect to the positioning reference point;
   determining the target position of respective vertexes of the display surface in the coordinate system of the laser radar based on the conversion relationship; and
   determining the first touch region, corresponding to the display surface, in the scanning surface of the laser radar based on the target position of the respective vertexes.

4. The method for determining touch region of any one of claims 1-3, wherein the acquiring target position information comprises:

   acquiring a preset position parameter for extending region of the display surface as the target position information; or
   collecting spatial position information of the display device in an actual usage scenario; and
   generating the target position information based on the spatial position information.

5. The method for determining touch region of claim 4, wherein the acquiring the preset position parameter for extending region of the display surface as the target position information comprises:

   reading the position parameter for extending region of the display surface from a preset parameter configuration file as the target position information; or
   displaying an adjustment interface for configuring a parameter of extending the touch region; and
   in response to a target parameter value of the parameter received in the adjustment interface, acquiring the position parameter for extending region of the display surface as the target position information.

6. The method for determining touch region of claim 4, wherein the generating the target position information based on the spatial position information comprises:

   determining spatial distance information of the display device from blocking objects on the upper, lower, left, and right sides in the actual usage scenario based on the spatial position information; and
   generating the target position information by combining the size of the display surface of the display device with the spatial distance information.

7. The method for determining touch region of any one of claims 1-3 and 5-6, wherein the determining the second touch region within the peripheral region of the display device based on the first touch region and the target position information comprises:

   determining an extending direction and an extending distance for extending region of the display surface based on the target position information; and
   translating the first touch region along the extending direction for the extending distance from a side of the first touch region corresponding to the extending direction, to obtain the extending touch region covered by the translation as the second touch region.

8. The method for determining touch region of any one of claims 1-3 and 5-6, wherein the determining the second touch region within the peripheral region of the display device based on the first touch region and the target position information comprises:

determining an extending direction and an extending area for extending region of the display surface based on the target position information; and

extending the first touch region along the extending direction according to the extending area to obtain the extending touch region within the peripheral region of the display device in the scanning surface of the laser radar as the second touch region.

9. The method for determining touch region of any one of claims 1-3 and 5-6, wherein the positioning reference point includes at least two vertexes on a diagonal of the display surface.

10. The method for determining touch region of claim 7, wherein the extending direction includes at least one of left, right, and lower sides.

11. A touch method applied to a display device, wherein an interactive region of the display device includes a first touch region and a second touch region determined by the method for determining touch region of any one of claims 1-10; the touch method comprising:

in an interactive state, when receiving blocking position information corresponding to the first touch region, generating touch position information point to point based on the blocking position information; and

in the interactive state, when receiving the blocking position information corresponding to the second touch region, generating a touch system event based on the blocking position information.

12. The touch method of claim 11, wherein the types of touch system events include one or more of a sliding-up event, a sliding-down event, a sliding-left event, a sliding-right event, and a long-press event.

13. The touch method of claim 11 or 12, wherein in the interactive state, when receiving the blocking position information corresponding to the second touch region, generating the touch system event based on the blocking position information includes:

in the interactive state, when receiving the blocking position information corresponding to the second touch region, determining multiple blocking position information having same change trend of the same coordinate component and change amount within a preset range as a touch system event, and determining a type of the touch system event based on the change trend.

14. An apparatus for determining touch region, applied to a display device, wherein the display device is provided with at least one laser radar, the laser radar is configured to scan a display surface of the display device and a peripheral region of the display device, the apparatus for determining touch region comprising:

a blocking-position-information acquiring module configured to acquire position information with respect to a positioning reference point in the display surface; wherein the blocking position information is collected by the laser radar scanning on the display surface of the display device, and the positioning reference point is a point in the display surface for determining the specific position information of the display surface in a scanning surface of the laser radar;

a first region determining module configured to determine a first touch region, corresponding to the display surface, in the scanning surface of the laser radar based on the blocking position information with respect to the positioning reference point;

a target-position-information acquiring module configured to acquire target position information when a function for extending the touch region in the display device is enabled; wherein the target position information is used for extending region of the display surface; and

a second region determining module configured to determine a second touch region within the peripheral region of the display device based on the first touch region and the target position information, wherein the second touch region is a region used for extending touch in the scanning surface of the laser radar; both the first touch region and the second touch region are used for touch interaction.

15. A touch apparatus applied to a display device, wherein an interactive region of the display device includes a first touch region and a second touch region determined by the method for determining touch region of any one of claims 1-10; the touch apparatus comprising:

a first touch-region interaction processing module configured to, in an interactive state, when receiving blocking position information corresponding to the first touch region, generate touch position information point to point based on the blocking position information; and

a second touch-region interaction processing module configured to, in the interactive state, when receiving the blocking position information corresponding to the second touch region, generate a touch system event based on the blocking position information.

16. A display device, comprising:

   a laser radar;
   one or more processors;
   a memory configured to store one or more computer programs;
   wherein one or more computer programs, when executed by one or more processors, cause the display device to perform the method of any one of claims 1-13.

17. A computer-readable storage medium, on which a computer program is stored, wherein the computer program, when executed by a processor, perform the method of any one of claims 1-13.

acquiring position information with respect to a positioning reference point in the display surface; wherein the blocking position information is collected by the laser radar scanning on the display surface of the display device, and the positioning reference point is a point in the display surface for determining the specific position information of the display surface in a scanning surface of the laser radar ⟶ S110

determining a first touch region, corresponding to the display surface, in the scanning surface of the laser radar based on the blocking position information with respect to the positioning reference point ⟶ S120

acquiring target position information when a function for extending the touch region in the display device is enabled; wherein the target position information is used for extending region of the display surface ⟶ S130

determining a second touch region within the peripheral region of the display device based on the first touch region and the target position information, wherein the second touch region is a region used for extending touch in the scanning surface of the laser radar; both the first touch region and the second touch region are used for touch interaction ⟶ S140

in an interactive state, when receiving blocking position information corresponding to the first touch region, generating touch position information point to point based on the blocking position information

S150

S160

in the interactive state, when receiving the blocking position information corresponding to the second touch region, generating a touch system event based on the blocking position information

Fig. 1

Fig. 2

101

Fig. 3

Fig. 4

Fig. 5

Fig. 6

blocking-position-information acquiring module | 310

First region determining module | 320

Target-position-information acquiring module | 330

Second region determining module | 340

Fig. 7

First touch-region interactive processing module | 410

Second touch-region interactive processing module | 420

Fig. 8

550

Communication
apparatus

520

Memory

530

Input apparatus

540

Output apparatus

510

Processor

Fig. 9

## INTERNATIONAL SEARCH REPORT

| International application No. |
|---|
| **PCT/CN2024/079452** |

### A.    CLASSIFICATION OF SUBJECT MATTER

G06F 3/0488(2022.01)i

According to International Patent Classification (IPC) or to both national classification and IPC

### B.    FIELDS SEARCHED

Minimum documentation searched (classification system followed by classification symbols)

IPC：G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 激光, 雷达, 扩展, 扩充, 延展, 延伸, 触摸, 触控, 区域, laser, radar, expand, touch+, section, area

### C.    DOCUMENTS CONSIDERED TO BE RELEVANT

| Category* | Citation of document, with indication, where appropriate, of the relevant passages | Relevant to claim No. |
|---|---|---|
| A | US 2023266827 A1 (TELEFONAKTIEBOLAGET LM ERICSSON) 24 August 2023 (2023-08-24)<br>  description, paragraphs 0040-0059, and claim 1 | 1-17 |
| A | CN 105353900 A (ZHEJIANG UNIVERSITY OF TECHNOLOGY) 24 February 2016 (2016-02-24)<br>  entire document | 1-17 |
| A | CN 110221752 A (BEIJING YUNJI TECHNOLOGY CO., LTD.) 10 September 2019 (2019-09-10)<br>  entire document | 1-17 |
| A | WO 2022263028 A1 (IMMERSIVE GROUP GAMING LTD.) 22 December 2022 (2022-12-22)<br>  entire document | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **29 September 2024** | **23 October 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/079452**

| Patent document cited in search report | | | Publication date (day/month/year) | Patent family member(s) | | | Publication date (day/month/year) |
|---|---|---|---|---|---|---|---|
| US | 2023266827 | A1 | 24 August 2023 | WO | 2022008078 | A1 | 13 January 2022 |
| | | | | EP | 4179417 | A1 | 17 May 2023 |
| | | | | AU | 2020457263 | A1 | 02 March 2023 |
| | | | | BR | 112023000230 | A2 | 31 January 2023 |
| CN | 105353900 | A | 24 February 2016 | | None | | |
| CN | 110221752 | A | 10 September 2019 | | None | | |
| WO | 2022263028 | A1 | 22 December 2022 | AU | 2022231737 | A1 | 19 January 2023 |

Form PCT/ISA/210 (patent family annex) (July 2022)